## Europäisches Patentamt

## European Patent Office

## Office européen des brevets

(19)

(11) Veröffentlichungsnummer: **0 160 230**
**B1**

(12) # EUROPÄISCHE PATENTSCHRIFT

(45) Veröffentlichungstag der Patentschrift:
01.07.87

(21) Anmeldenummer: **85104049.3**

(22) Anmeldetag: **03.04.85**

(51) Int. Cl.⁴: **B 65 G 1/02,** A 47 B 57/26,
F 16 B 12/40

(54) **Lagergestell.**

(30) Priorität: **06.04.84 DE 8410785 U**

(43) Veröffentlichungstag der Anmeldung:
**06.11.85 Patentblatt 85/45**

(45) Bekanntmachung des Hinweises auf die Patenterteilung:
**01.07.87 Patentblatt 87/27**

(84) Benannte Vertragsstaaten:
**AT BE CH DE FR GB IT LI LU NL SE**

(56) Entgegenhaltungen:
**AU-B-522 522**
**DE-B-1 429 583**
**DE-C-816 150**
**DE-U-6 604 861**
**FR-A-1 291 003**
**FR-A-2 157 749**

(73) Patentinhaber: **Reifen- Ihle GmbH, Schreberstrasse 7, D-8870 Günzburg (DE)**

(72) Erfinder: **Ihle, Johann, Schreberstrasse 7, D-8870 Günzburg (DE)**

(74) Vertreter: **Munk, Ludwig, Dipl.- Ing., Patentanwalt Prinzregentenstrasse 1, D-8900 Augsburg (DE)**

LIBER, STOCKHOLM 1987

## Beschreibung

Die Erfindung betrifft ein Lagergestell, insbesondere zur Lagerung von Autoreifen, Felgen oder dergleichen, bestehend aus Standrohren, Längsrohren und Querstreben, die senkrecht zueinander angeordnete Fassung zum Durchstecken der Stand- und Längsrohre aufweisen und mit zum Einschrauben von den Stand- und Längsrohren zugeordneten Klemmschrauben dienenden, lotrecht zur Achse der jeweiligen Fassung verlaufenden Gewindelöchern versehen sind.

Eine Anordnung dieser Art ist aus der DE-AS 14 29 583 bekannt. Bei dieser bekannten Anordnung sind die Querstreben als aus Gußeisen bestehende Gußformlinge ausgebildet, die an ihren Enden angeformte, die Fassungen bildende Büchsen tragen. Bei diesen Querstreben handelt es sich demnach um Vollmaterialteile, so daß sich ein vergleichsweise hohes Gewicht ergibt, was im Hinblick auf die Versandkosten unerwünscht ist. Außerdem besitzen die bekannten Querstreben infolge der Sprödheit von Gußeisen nur eine vergleichsweise geringe Biegewechselfestigkeit und Zähigkeit, so daß insbesondere bei längeren Querstreben eine nicht unbeträchtliche Bruchgefahr besteht. Ferner ist davon auszugehen, daß die Stand - und Längsrohre hier im Bereich ihres Außenumfangs mit einer vergleichsweise großen Fläche am Innenumfang der jeweils zugeordneten Büchsen anliegen, so daß sich auch bei einem sehr starken Anzug der Klemmschrauben nur geringe Flächenpressungen ergeben, was sich ungünstig auf den erzielbaren Halt auswirkt. Nachteilig ist in diesem Zusammenhang zudem, daß die Gewindegänge eines in das Gußmaterial eingeschnittenen Gewindelochs vergleichsweise leicht ausbrechen können, so daß der zulässige Anzug der Klemmschrauben von hierher begrenzt ist. Ein weiterer, ganz besonderer Nachteil der bekannten Anordnung ist darin zu sehen, daß hier infolge der benötigten Gußmodelle für die als Gußformlinge ausgebildeten Querstreben lediglich eine Herstellung in vergleichsweise großen Stückzahlen wirtschaftlich ist, so daß Soderwünsche vielfach nicht erfüllbar sind. Außerdem läßt sich die Oberfläche der gegossenen Querstreben auf galvanischem Wege nicht beschichten. Man ist daher auf Tauchverfahren angewiesen, was jedoch sehr umständlich und aufwendig ist.

Hiervon ausgehend ist es daher die Aufgabe der vorliegenden Erfindung, die obengeschilderten Nachteile zu vermeiden und ein Lagergestell eingangs erwähnter Art mit einfachen und kostengünstigen Mitteln so zu verbessern, daß nicht nur ein geringes Transportgewicht bei gleichzeitig erreichter hoher Festigkeit der Querstreben und zuverlässiger Halterung der Stand- und Längsrohre erreicht wird, sondern daß gleichzeitig auch eine wirtschaftliche Herstellung auch im Rahmen kleinerer Serien sowie eine einfache Oberflächenvergütung möglich sind.

Diese Aufgabe wird erfindungsgemäß dadurch gelöst, daß die Querstreben als Abschnitte eines Profilrohrs mit den Durchmesser der Stand- und Längsrohre übersteigender Weite ausgebildet und mit die Fassungen zum Durchstecken der Stand- und Längsrohre bildenden Wandausnehmungen sowie mit diesen zugeordneten, an einer parallel zur jeweiligen Fassungsachse verlaufenden Wandung befestigten Gewindebüchsen für die Klemmschrauben versehen sind.

Diese Maßnahmen ergeben in vorteilhafter Weise ein vergleichsweise geringes Gewicht der zum Versand kommenden Querstreben, so daß gegenüber bisher eine nicht unbeträchtliche Senkung der Versandkosten erreicht werden kann. Trotz des vergleichsweise geringen Baugewichts ergibt sich jedoch eine hohe Biegefestigkeit und Zähigkeit der Querstreben, so daß auch bei einer vergleichsweise großen Länge der Querstreben weder eine unzulässige Durchbiegung noch eine Bruchgefahr zu befürchten sind. Da hier zur Herstellung der Querstreben auch keine Gußmodelle erforderlich sind, läßt sich hier in vorteilhafter Weise auch bei der Herstellung von Kleinserien eine hohe Wirtschaftlichkeit erreichen. Ein weiterer Vorteil der erfindungsgemäßen Maßnahmen ist darin zu sehen, daß hier die Stand- und Längsrohre lediglich im Bereich des Rands der zugeordneten Wandausnehmungen der die Querstreben bildenden Profilrohrabschnitte an diesen anliegen, so daß sich eine vergleichsweise hohe Flächenpressung und damit eine zuverlässige Halterung ergibt. Gleichzeitig ist es hierbei in vorteilhafter Weise möglich, die den Klemmschrauben zugeordneten Gewindebüchsen aus einem anderen, festeren Material als die Querstreben selbst herzustellen, was eine lange Lebensdauer gewährleistet. Außerdem gestattet die Verwendung von Profilrohrabschnitten zur Bildung der Querstreben auch eine einfache galvanische Beschichtung der Querstreben, wie dies auch bei den Stand- und Längsrohren moglich ist. Hierdurch ergibt sich demnach nicht nur eine Vereinfachung der Herstellung, sondern auch eine Verbesserung des optischen Gesamteindrucks, so daß eine Ausweitung des Einsatzgebiets des erfindungsgemäßen Lagergestells von der reinen Lagertechnik auf den Laden- und Messebau etc. möglich ist. Die mit der Erfindung erzielbaren Vorteile sind demnach sowohl in einer erhöhten Zuverlässigkeit als auch in einer verbesserten Wirtschaftlichkeit zu sehen.

In vorteilhafter Weiterbildung der übergeordneten Maßnahmen können die Querstreben als Abschnitte eines Rechteckrohrs ausgebildet sein. Hierdurch ergeben sich ebene Rohrwandungen, die eine einfache Bearbeitung ermöglichen.

In weiterer Fortbildung der übergeordneten Maßnahmen können die Wandausnehmungen zum Durchstecken der Stand- und Längsrohre scharfe Brauchkanten aufweisen was sich positiv auf die Erzielung eines zuverlässigen Halts auswirken kann.

Eine andere vorteilhafte Maßnahme kann darin bestehen, daß die Gewindebüchsen in eine jeweils zugeordnete Bohrung im Bereich einer parallel zur Fassungsachse verlaufenden Wandung der die Querstreben bildenden Profilrohrabschnitte eingreifen und im Bereich ihres inneren Endes mit einem den Bohrungsrand hintergreifenden Flansch versehen sind. Hierdurch ergibt sich eine zuverlässige Abstützung der Gewindebüchsen entgegen der von den Klemmschrauben aufzubringenden Klemmkraft.

Eine weitere zweckmäßige Maßnahme kann in diesem Zusammenhang darin bestehen, daß die Gewindebüchsen in jeweils zugeordnete Bohrung eingepreßt sind. Hierdurch ergibt sich eine weitere Vereinfachung der Herstellung. Da die Preßpassung die Büchse lediglich während des Transportwegs zu halten hat, genügt in vorteilhafter Weise bereits ein leichter Preßsitz. Im Betriebszustand stützen sich die Gewindebüchsen mit ihrem Flansch an der jeweils zugeordneten Querstrebenwandung ab.

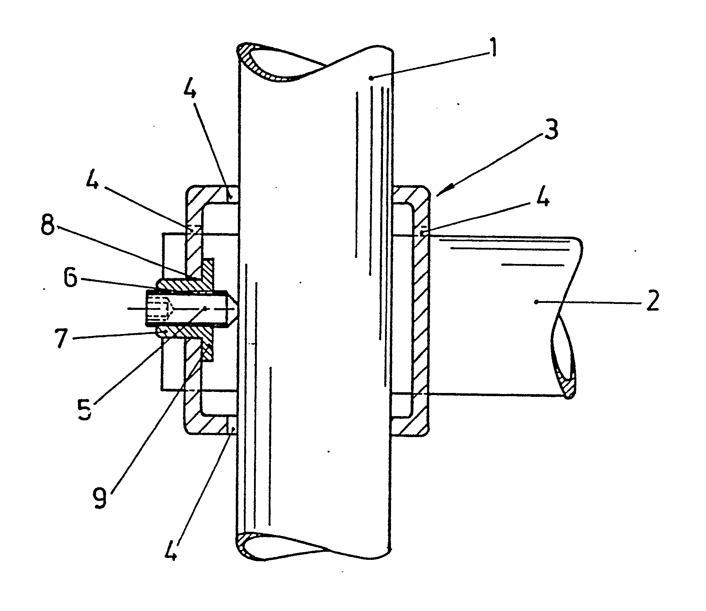

Weitere, zweckmäßige Fortbildungen und vorteilhafte Ausgestaltungen der übergeordneten Maßnahmen ergeben sich aus der nachstehenden Beschreibung eines Ausführungsbeispiels anhand der Zeichnung in Verbindung mit den restlichen Unteransprüchen.

Die einzige Figur der Zeichnung zeigt eine Teilansicht eines erfindungsgemäßen Lagergestells anhand eines Querschnitts durch eine an einem Standrohr und einem Längsrohr festgelegte Querstrebe.

Das der Zeichnung zugrundeliegende Lagergestell besteht in an sich bekannter Weise aus lotrecht angeordneten Standrohren 1, waagrecht verlaufenden Längsrohren 2 und quer zu den Standrohren 1 und den Längsrohren 2 verlaufenden, waagrecht angeordneten Querstreben 3. Die Standrohre 1 und die Längsrohre 2 bestehen aus Abschnitten einfacher Rundrohre. Hierfür werden in der Regel 1-Zoll-Rohre der Qualität IIa verwendet, die eine Wandstärke von etwa 3 mm aufweisen, so daß die lotrechten Standrohre eine hohe Knicksicherheit und die waagrechten Längsrohre eine hohe Tragfähigkeit ergeben und damit einen großen Stützabstand zulassen. Da es sich hierbei um einfache Abschnitte von Normrohren handelt, können diese in der Regel vom Benutzer selbst beschafft werden, so daß nur noch die Querstreben 3 vom Hersteller bezogen und von diesem zum Versand gebracht werden müssen.

Die Querstreben 3 bestehen aus Abschnitten eines Rechteckprofilrohres, dessen hier quadratischer Querschnitt eine Kantenlänge aufweist, die größer als der Durchmesser der Stand- bzw. Längsrohre 1 bzw. 2 ist, so daß diese zuverlässig aufgenommen werden können. Hierzu sind die Querstreben 3 mit paarweise zusammengehörenden Wandausnehmungen 4 versehen, die senkrecht zueinander verlaufende Fassungen zum Durchstecken der Standrohre 1 bzw. Längsrohre 2 bilden. Die Wandausnehmungen 4 besitzen gegenüber dem Außendurchmesser der zugeordneten Standrohre 1 bzw. Längsrohre 2 leichtes Übermaß in der Größenordnung von etwa 2 mm, so daß die Rohre leicht eingesteckt werden können. Die Lage der einzelnen, jeweils eine Rohrfassung bildenden Ausnehmungspaare richtet sich nach der gewünschten Gestellkonfiguration. In der Regel befinden sich im Bereich der Enden der Querstreben jeweils zwei Fassungen für senkrecht zueinander verlaufende Rohre. Dies ergibt einen gerüstartigen Aufbau mit paarweise angeordneten Standrohren und paarweise angeordneten Längsrohren. Es wäre aber auch ohne weiteres denkbar, mehrere Standrohre bzw. mehrere Längsrohre vorzusehen. In diesem Falle sind die Querstreben 3 einfach entsprechend lang auszubilden und mit den die gewünschten Fassungen bildenden Wandausnehmungen 4 zu versehen. Die Wandausnehmungen 4 können als Bohrungen ausgebildet sein. Im dargestellten Ausführungsbeispiel sind die Wandausnehmungen 4 einfach durch Ausbrechen hergestellt. Der Rand dieser Löcher ist vergleichsweise rauh und besitzt eine infolge des kegelförmig erfolgenden Bruchs leicht hinterschnittene, scharfe Kante, was eine zuverlässige, form- und kraftschlüssige Klemmverbindung ermöglicht.

Zum Festklemmen der Rohre sind senkrecht zu den Achsen der die Rohrfassungen bildenden Wandausnehmungen 4 angeordnete Klemmschrauben 5 vorgesehen, die in eine jeweils zugeordnete, mit einer entsprechenden Gewindebohrung 6 versehene Gewindebüchse 7 einschraubbar sind. Die Gewindebüchsen 7 greifen durch eine zugeordnete Bohrung 8 im Bereich einer zur Achse der zugeordneten Rohrfassung parallelen Seitenwandung des die Querstrebe 3 bildenden Profils hindurch und sind im Bereich ihres inneren Endes mit einem Flansch 9 versehen, der den Rand der zugeordneten Bohrung 8 hintergreift. Der Flansch 9 ergibt eine zuverlässige, den Schraubkräften entgegenwirkende Abstützung. Die Halterung der Gewindebüchsen 7 kann mittels eines aufgespannten Klemmrings etc. erfolgen. Im dargestellten Ausführungsbeispiel ist die Gewindebüchse 7 einfach mit Preßsitz in die zugeordnete Bohrung 8 eingesetzt.

Die Gewindebüchse 7 soll im dargestellten Ausführungsbeispiel aus einem die Qualität eines Gewindemuttermaterials aufweisenden Material bestehen. Hierbei handelt es sich um eine gegenüber dem Material der Querstrebe 3 in der Regel festeres Material, sodaß hier gegenüber einem direkt eingeschnittenen Gewinde vergleichsweise große Schraubkräfte aufgenommen werden können. Zur Erzielung einer besonders hohen Festigkeit kann die Gewindebüchse 7 aus gehärtetem Material bestehen, was sich auch positiv auf den gewünschten Preßsitz im Bereich der Bohrung 8 auswirken kann. Die Länge der Gewindebüchse 7 wird in Abhängigkeit von den benötigten Gewindegängen gewählt. In der Praxis genügt dabei in der Regel eine derartige Länge der Gewindebüchse 7, daß sich im Bereich des äußeren Endes ein bündiger Übergang zur Außenoberfläche der Querstrebe 3 ergibt. Im dargestellten Ausführungsbeispiel ist ein leichter Überstand vorgesehen, was einen besonders langen Gewindeeingriff ermöglicht. Die Klemmschrauben 5 können im Bereich ihres vorderen Endes mit einer scharfen, ringförmigen Schneidkante versehen sein, um die Klemmwirkung zu erhöhen. Im dargestellten Ausführungsbeispiel ist die Klemmschraube 5 als sogenannte Imbusschraube ausgebildet. Es wäre aber auch eine Ausbildung als einfache Kopfschraube ohne weiteres möglich.

Die Standrohre 1, Längsrohre 2 und die Querstreben 3 samt eingepreßten Gewindebüchsen 7 sind mit einem Oberflächenschutz versehen. Im dargestellten Ausführungsbeispiel soll es sich dabei um eine galvanisch aufgebrachte Zink- oder Nickelschicht handeln, was einen ausgezeichneten optischen Gesamteindruck ergibt.

## Patentansprüche

1. Lagergestell, insbesondere zur Lagerung von Autoreifen, Felgen oder dergleichen, bestehend aus Standrohren (1), Längsrohren (2) und Querstreben (3), die senkrecht zueinander angeordnete Fassungen zum Durchstecken der Stand- und Längsrohre (1, 2) aufweisen und mit zum Einschrauben von den Stand- und Längsrohren (1, 2) zugeordneten Klemmschrauben (5) dienenden, lotrecht zur Achse der jeweiligen Fassung verlaufenden Gewindelöchern (6) versehen sind, dadurch gekennzeichnet, daß die Querstreben (3) als Abschnitte eines ebene Seitenflächen aufweisenden Profilrohres mit den Durchmesser der Stand- bzw. Längsrohre (1, 2) übersteigender lichter Weite ausgebildet und mit die Fassungen zum Durchstecken der Stand- bzw. Längsrohre (1, 2) bildenden Wandausnehmungen (4) sowie mit diesen zugeordneten, an einer parallel zur jeweiligen Fassungsachse verlaufenden Wandung befestigten Gewindebüchsen (7) für die Klemmschrauben (5) versehen sind.

2. Lagergestell nach Anspruch 1, dadurch gekennzeichnet, daß die Querstreben (3) als Abschnitte eines Rechteckrohrs ausgebildet sind.

3. Lagergestell nach einem der vorhergehenden Ansprüche, dadurch gekennzeichnet, daß die Wandausnehmungen (4) zum Durchstecken der Stand- bzw. Längsrohre (1, 2) als scharfe Bruchkanten aufweisen.

4. Lagergestell nach einem der vorhergehenden Ansprüche, dadurch gekennzeichnet, daß die Wandausnehmungen (4) zum Durchstecken der Stand- bzw. Längsrohre (1, 2) gegenüber deren Durchmesser Übermaß besitzen.

5. Lagergestell nach einem der vorhergehenden Ansprüche, dadurch gekennzeichnet, daß die Gewindebüchsen (7) in eine jeweils zugeordnete Bohrung (8) im Bereich einer parallel zur Fassungsachse verlaufenden Wandung der die Querstreben (3) bildenden Profilrohrabschnitte eingreifen und im Bereich ihres inneren Endes mit einem den Bohrungsrand hintergreifenden Flansch (9) versehen sind.

6. Lagergestell nach einem der vorhergehenden Ansprüche, dadurch gekennzeichnet, daß die Gewindebüchsen (7) in die jeweils zugeordnete Bohrung (8) eingepreßt sind.

7. Lagergestell nach einem der vorhergehenden Ansprüche, dadurch gekennzeichnet, daß die äußere Stirnseite der Gewindebüchsen (7) bündig an den äußeren Rand der Bohrung (8) anschließt.

8. Lagergestell nach einem der vorhergehenden Ansprüche, dadurch gekennzeichnet, daß die Querstreben (3) und vorzugsweise auch die Stand- und Längsrohre (1, 2) mit einer aufgalvanisierten Oberflächenbeschichtung versehen sind.

## Claims

1. A bearing support, in particular for bearing car tyres, rims or the like, consisting of vertical pipes (1), longitudinal pipes (2) and cross-girths (3) which have holders situated at right angles to each other and used for putting through the vertical and longitudinal pipes (1, 2), and threaded holes (6) running at right angles to the axis of the respective holder and serving for inserting setscrews (5) which cooperate with the vertical and longitudinal pipes (1, 2), characterized in that the cross-girths (3) are in the form of sections of a profile pipe with plane lateral faces having an inside diameter greater than the diameter of the vertical or respectively longitudinal pipes (1, 2), and have wall clearances (4) forming the holders for putting through the vertical or respectively longitudinal pipes (1, 2), as well as threaded bushings (7) for the setscrews (5) cooperating with the wall clearances (4), and being attached to a wall parallel to the axis of the respective holder.

2. A bearing support as claimed in claim 1 characterized in that the cross-girths (3) are in the form of sections of a rectangular pipe.

3. A bearing support as claimed in anyone of the preceding claims characterized in that the wall clearances (4) for putting through the vertical or respectively longitudinal pipes (1, 2) have sharp rupture edges.

4. A bearing support as claimed in anyone of the preceding claims characterized in that the wall clearances (4) for putting through the vertical or respectively longitudinal pipes (1, 2) are greater than the diameter of the said pipes (1, 2).

5. A bearing support as claimed in anyone of the preceding claims characterized in that the threaded bushings (7) engage each with a cooperating hole (8) at a wall of the sections of the profile pipe forming the cross-girths (3) which runs parallel to the axis of the holder, and, at their inner end, have a flange (9) reaching behind the edge of the hole (8).

6. A bearing support as claimed in anyone of the preceding claims characterized in that the threaded bushings (7) are each pressed into the cooperating hole (8).

7. A bearing support as claimed in anyone of the preceding claims characterized in that the outer face of the threaded bushings (7) is flush with the outer edge of the hole (8).

8. A bearing support as claimed in anyone of the preceding claims characterized in that the cross-girths (3) and preferably also the vertical and longitudinal pipes (1, 2) have a galvanised surface coating.

**Revendications**

1. Châssis d'entreposage, notamment pour des pneus d'automobiles, des jantes ou des articles similaires, comprenant des tubes verticaux (1), des tubes longitudinaux (2) et des traverses (3) qui comportent des montures disposées perpendiculairement les unes aux autres pour être traversées par les tubes verticaux (1) et par les tubes longitudinaux (2) et qui sont pourvues d'alésages filetés (6) disposés perpendiculairement à l'axe de la monture respective et servant au montage de vis de serrage (5) des tubes verticaux et longitudinaux (1, 2), caractérisé en ce que les traverses (3) sont constituées par des tronçons d'un profilé tubulaire à faces latérales planes dont la largeur intérieure est plus grande que le diamètre des tubes verticaux et longitudinaux (1, 2) et comportent des ouvertures (4) ménagées dans leurs parois pour constituer les montures traversées par les tubes verticaux et longitudinaux (1, 2), ainsi que des douilles filetées (7) prévues pour recevoir les vis de serrage (5) et correspondant auxdites ouvertures, ces douilles étant fixées à une paroi paralléle à l'axe de la monture correspondante.

2. Châssis selon la revendication 1, caractérisé en ce que les traverses sont constituées par des tronçons d'un tube rectangulaire.

3. Châssis selon l'une quelconque des précédentes, caractérisé en ce que les ouvertures (4) pour le passage des tubes verticaux et longitudinaux (1, 2) comportent bordes aigus.

4. Châssis selon l'une quelconque des revendications précédentes, caractérisé en ce que les ouvertures (4) pour le passage des tubes verticaux et longitudinaux (1, 2) sont plus grandes que le diamètre de ces tubes.

5. Châssis selon l'une quelconque des revendications précédentes, caractérisé en ce que les douilles filetées (7) sont engagées dans un alésage respectif (8) ménagé dans une paroi, parallèle à l'axe de la monture, des tronçons de profilé tubulaire constituant les traverses (3), et comportent au voisinage de leur extrémité intérieure une coilerette (9) s'appuyant derrière le bord dudit alésage.

6. Châssis selon l'une quelconque des revendications précédentes, caractérisé en ce que les douilles filetées (7) sont chassées dans lesdits alésages respectifs (8).

7. Châssis selon l'une quelconque des revendications précédentes, caractérisé en ce que la face frontale extérieure des douilles filetées (7) se trouve à fleur du bord extérieur dudit alésage (8).

8. Châssis selon l'une quelconque des revendications précédentes, caractérisé en ce que les traverses (3) et de préférence aussi les tubes verticaux et longitudinaux (1, 2) comportent un revêtement superficiel appliqué par galvanisation.